# EUROPEAN PATENT SPECIFICATION

(11) **EP 2 786 661 B1**
(45) Date of publication and mention of the grant of the patent: **13.01.2016**
(21) Application number: 14161401.6
(22) Date of filing: 25.03.2014
(51) Int. Cl.: A22C 15/00

(54) **An apparatus and a method for loading and distancing support rods of hung products**
Vorrichtung und Verfahren zum Laden und Beabstanden von Stützstäben hängender Produkte
Appareil et procédé permettant de charger et d'écarter des tiges de support de produits suspendus

(30) Priority: 27.03.2013 IT RE20130023
(43) Date of publication of application: 08.10.2014
(73) Proprietor: Fava s.n.c. di Adele Turetta & c., 43126 Parma (IT)
(72) Inventor: Fava, Antonio, 43100 Parma (IT)
(74) Representative: Corradini, Corrado

(56) References cited:
- EP-A1- 2 305 044
- US-A1- 2004 142 650
- US-A1- 2011 053 481
- US-B1- 7 588 485

## Description

The invention relates to an apparatus for loading and distancing support rods of products which are hung to the rods, operating in a loading station of the products on the rod.

The invention relates typically to machines for hanging products on free support rods (i.e. rods which are not stably constrained to other organs) and then sending them to special storing means.

A typical application is for manipulating meat products (salami, brawn, bacon or other sacked meats).

For this purpose the products are provided with a loop (or an equivalent means) with which they are hung to a free support rod.

Apparatus are known for hanging products provided with a hanging loop, on free support rods, comprising:
- a product supply line, provided with first hooking organs able to support the hung products by means of hooking loops;
- a loading station of the products onto support rods having constraining means able to support, in a fixed position, a support rod at a time with at least a free end;
- a loading device, able to transfer, in succession, the products from the transport line to the support rod supported in the loading station.

Document US 7 588 485 discloses an apparatus for loading and distancing support rods for hanging products in a loading station.

On August 3rd 2012 the present applicant filed a patent application RE2012A000052, published later as European patent application EP 2 692 236 A1, in which an apparatus is illustrated for hanging products on support rods, which comprises:
- a supply line of the products, provided with first hooking organs, able to support the hung products by means of hooking loops, the first hooking organs being conformed such as to maintain the eyelet of the hooking loop open;
- a loading station of the products on the support rod having constraining means able to support, in a fixed position, a support rod at a time;
- a handling device, operating with alternating motion, able to transfer, one at a time, the products from a supply line to the support rod supported in the loading station.

After the determined number of products has been loaded on the support rod, the rod is freed from the loading station and then transferred on a distancing means, in particular on a pair of chain conveyors, possibly provided with specially-distanced reference elements; the chain conveyors are advanced by a step, and are readied to receive, in the successive cycle, the next rod loaded with products, and realizing an ordering of loaded rods which will be transferred, together, on frames or scales which will in turn be transferred to other places in order to undergo drying, seasoning, smoking, or other treatments.

An aim of the present invention is to realise an apparatus for arranging empty rods in the loading position and transferring them, one at a time, loaded with products hung thereto from the loading station to the distancing means located downstream, the realisation of which is structurally and constructionally relatively simple, and the functioning of which is relatively reliable and rapid.

A further aims of the apparatus is to perform, apart from the functions of loading empty rods and distancing loaded rods, also support functions of the rod located in the loading station, during the step of loading the products on the rod.

This and other aims are attained by the invention as it is characterised in the claims.

The invention is set out in detail in the following, with the aid of the accompanying figures of the drawings, which illustrate a non-exclusive embodiment of the invention, by way of example.
Figure 1 is a schematised plan view of a plant for handling products hung on support rods comprising the apparatus of the invention.
Figure 2 is a vertical elevation of figure 1, in the direction of the arrow II, simplified, without the transfer carriage 31.
Figure 3 is an enlarged detail of figure 1.
Figure 3A is a further enlarged detail of figure 3.
Figure 4 is a vertical elevation according to plane IV-IV of figure 3.
Figures from 4A to 4D show a succession of steps in the functioning of the apparatus of claim 4.
Figure 5 is a detail of figure 4 according to a three-dimensional view, simplified.
Figure 6 is a support rod R on which a group of products P is hung.
Figure 7 shows the collecting device 70 along the same section plane as figure 4.

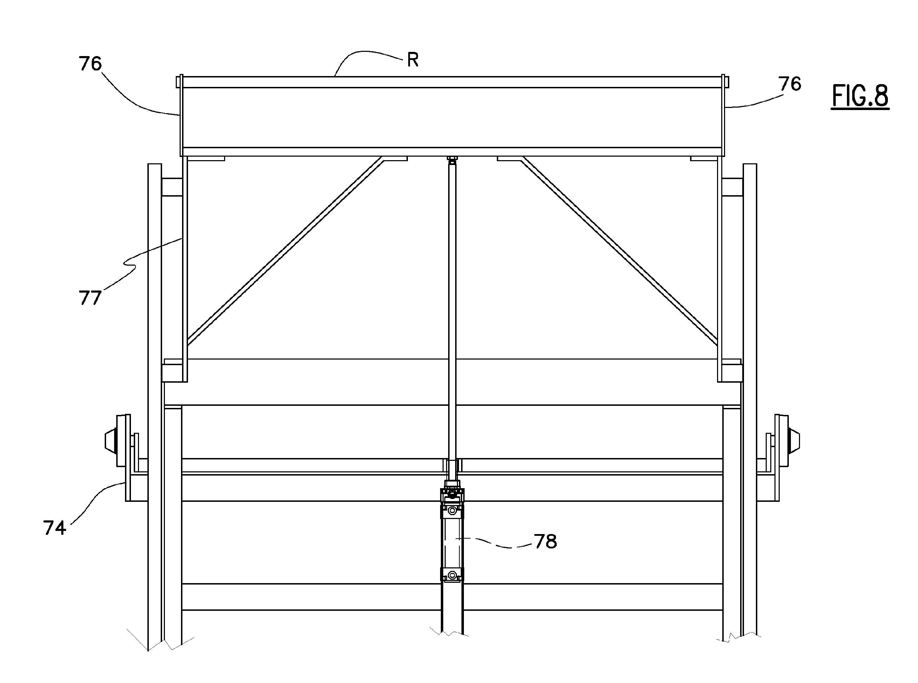

Figure 8 is a vertical elevation, in the direction of the arrow VIII-VIII of figure 7.

The apparatus of the invention works with products P having a hooking loop P1 with which the products are hung to a support rod R, grouped in a predetermined number, with a step and a position that are possibly adjustable; the support rod R is free, i.e. has ends thereof not constrained stably, and is destined, after the product P loading operation, to be transferred onto scales, frames, carriage, then in turn transferred to a subsequent treatment step, for example seasoning, smoking, or another.

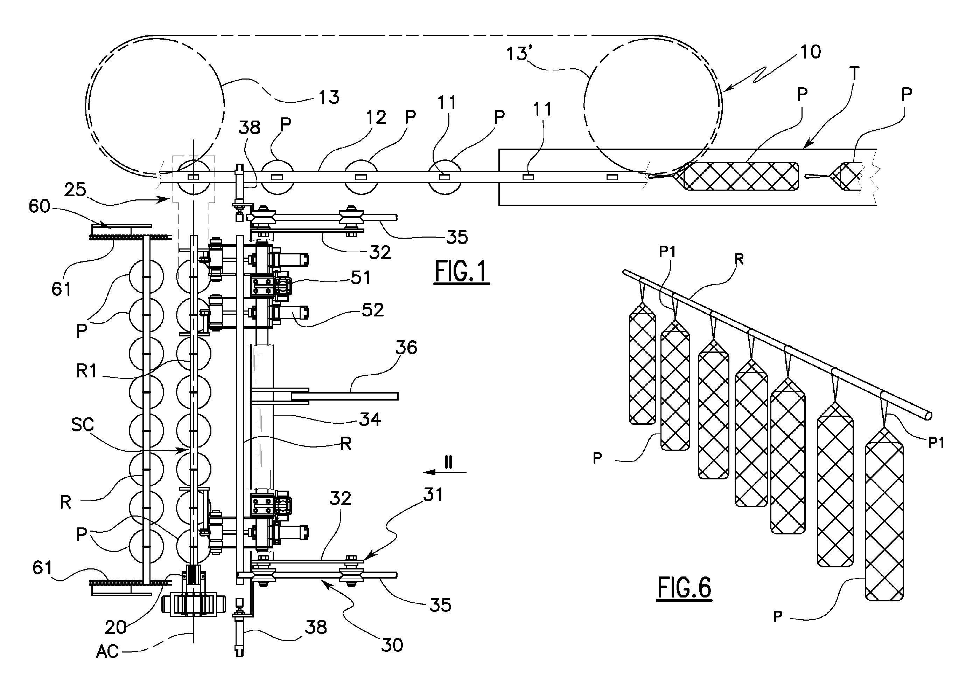

A support rod R on which a group of products P is hung is shown in figure 6. The loop P1 is normally in the form of a closed string and is usually obtained with a floppy flexible filament constrained at an end of the product P; alternatively it can be rigid, or not deformable under the weight of the product, and further can have an open end, such as a hook, having one joined end only constrained to the product P.

The general plant, in which the apparatus of the invention is inserted, comprises a supply line 10 of the products, provided with first hooking organs 11, able to support the products P, these being hung on the organs 11 by means of the hooking loops P1.

For example, as illustrated in figure 1, the supply line 1 comprises a chain mechanism 12, loop-wound about at least two end wheels 13 and 13', which moves along a pathway which coincides with the longitudinal extension thereof. The hooking organs 11 are fixed to the chain mechanism 12, distributed uniformly, along the whole extension of the chain mechanism. The plant further comprises a loading station SC of the products P on the support rods R, having constraining means which constrain and support, in a fixed horizontal position, an end Rb of a support rod R, while the other end Ra located closer to the supply line 10 is left free. The constraining means comprise a gripping means 21 able to constrain, jointingly, the end Rb of the support rod R further from the supply line 10. The rod R blocked in the loading position in the station is denoted in the figures by R1 and the axis is denoted by AC; this axis defines the loading axis of the station SC.

An initial supply belt T is provided at the start of the supply line 10, which advances loose products P placed on the horizontal lie, which are hung to the supply line 10 with the loops P1 hung to the first hooking organs 11.

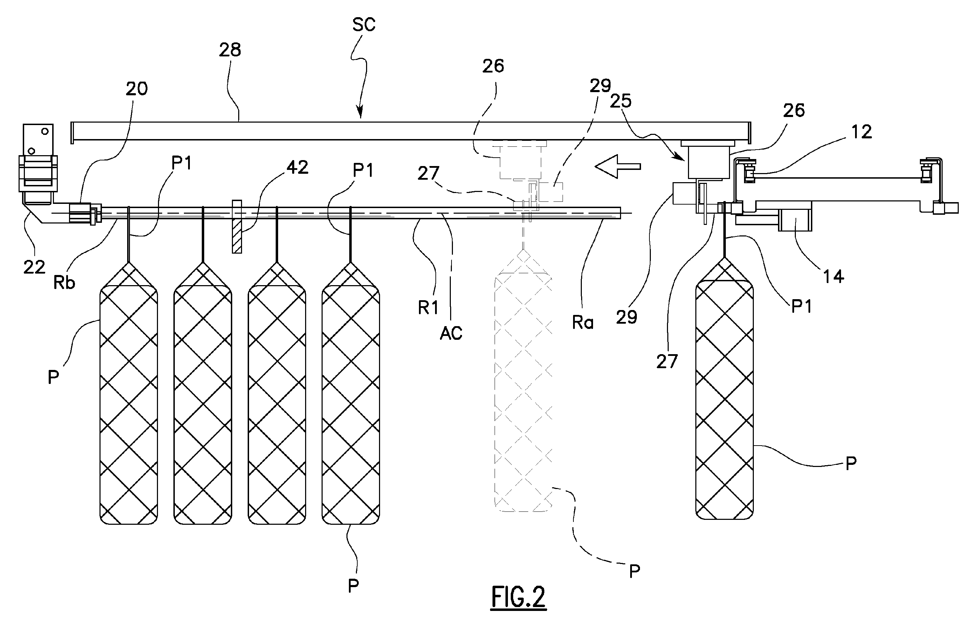

The plant further comprises a loading device 25 (see figure 2) operating with alternating motion, which is able to transfer, one at a time and in succession, the products P from the supply line 10 to the support rod R1 blocked in the loading station SC.

The loading device 25 comprises a sliding track 28 which is arranged parallel to the support rod R1 located in the loading position SC; in particular it is arranged above and at a brief distance from the rod R.

The device 25 comprises a mobile apparatus 26 forwards and backwards along the tract 28, in a travel which starts from the supply line 10 and terminates at a point, variable from travel to travel, of the support rod R1 and vice versa. The mobile apparatus 26 bears a hooking organ 27 conformed such as to supportingly receive the hooking loop P1 coming from the first hooking organ 11 and such as to keep the eyelet of the loop P1 open, such that the loop itself can be inserted about the support rod R following the axial displacement of the mobile apparatus 26 with respect to the rod R.

The second hooking organ 27 is projecting fixed, with a horizontal directrix, to a bracket fixed to the mobile apparatus 26 and is place in a geometrical relation to the first hooking organ 11 such that when the mobile apparatus 26 is brought into a loading position in the station SC, close to the supply line 10, and close to a hooking organ 11, is able to receive the loop P1 of a product P initially hung on the organ 11.

In particular, a first pusher means 14 is provided, operating on the line 10 at the loading station SC, which pushes the hooking loop P1 from the first hooking organ 11 onto the second hooking organ 27. The mobile apparatus 26 is located vertically above the rod R1, at a relatively short distance therefrom and, during the movement thereof along the track 28, moves parallel to the axis of the rod R so that the loop P1 hung thereto slides about the section of the support rod R fixed in the loading station; a second pusher means 29, associated to the mobile apparatus 26, pushes the loop P1 from the second hooking organ 27 to the support rod R.

The plant illustrated herein above is described with greater detail in the Italian Patent Application RE2012A000052, in the name of the same applicant; this is one of the various and different examples of supply line and loading station, in which the apparatus of the invention is inserted.

A distancing means 60 is arranged downstream of the loading station SC.

In the embodiment of the figures, illustrated by way of example, the means 60 comprises a pair of chain conveyors, wound about respective upstream wheels 62, which bear support seatings 63 for the rods R, facing upwards, appropriately distanced; the chain conveyors advance, possibly at each loading cycle, by a step, in preparation for receiving the next loading rod R of products, and realizing an order formed by one or more (in variable numbers) of rods loaded with products which will then be transferred together on the frames or scales, which will in turn be transferred into other rooms to undergo drying, seasoning, smoking or other treatments.

Obviously, the distancing means 60 can be realised in many and various ways, with different functioning logics too.

The present invention relates to an apparatus 30 for transferring products hanging from horizontal support rods R from the loading station SC to the distancing means 60 thereof, and at the same time loading an empty rod R in the loading position of the station SC.

The transferring apparatus 30 further comprises constraining means 20 able to fixedly constrain a support rod R at a time in a horizontal fixed loading position of the products on the rod, in the loading station.

In particular the means 20 comprise a pair of jaws 21 fixed to the lower end of two arms 22 rotatable about two respective chains 22a located at the upper ends of the arms 22, supported by a bracket 23 fixed to a fixed support structure F of the apparatus (of which only limited portions are shown in the figures).

Following symmetrical rotations of the two arms 22 about the axes of chains 22a, which are parallel to the axis AC and located superiorly at a distance therefrom, the jaws are able to near one another such as to grip the further end Rb of a rod R, and retaining it fixedly projectingly, in the horizontal fixed position coaxial with the loading axis AC.

The apparatus 30 comprises a transfer carriage 31 mobile along parallel rails 35 located in a horizontal plane; the movement of the carriage 31 occurs in a perpendicular direction to the vertical plane passing through the axis AC of the rod in the loading position SC, between a first and a second operating position, distal and respectively proximal with respect to the distancing means 60.

The transfer carriage 31 bears a plurality of first handling arms 41, which extend on perpendicular planes to the loading axis AC and parallel to one another; the arms 41 exhibit first profiled seatings which define a first support position for a support rod R, having a parallel axis to the axis AC. The seatings 43 are able to retain, in a precise position, a rod R located resting between them.

The transfer carriage 31 further bears a second plurality of handling arms 42, which extend on perpendicular planes to the loading axis AC and parallel thereto; the arms 42 possess second profiled seatings 44 which define a second support position for a supporting rod, parallel to the loading station SC. The seatings 44 are able to retain, in a precise position, a rod R located resting between them.

The first and second support seatings 43, 44 are placed in a distal position and respectively in a proximal position with respect to the distancing means 60, and the arms 41 and 42 are constrained to the transfer carriage 31 with freedom to rotate about at least a first axis A1, parallel to the axis AC of the loading station SC. Also provided are special means able to rotate the handling arms about the first rotation axis A1.

In the preferred embodiment, illustrated in the figures, the first handling arms 41 are hinged to the transfer carriage 31 with freedom to rotate with respect thereto about the first rotation axis A1. Further, the second handling arms 42 are hinged to the first handling arms 41, rotatably with respect thereto, about a second rotation axis A2 parallel to the first axis A1 and at a distance therefrom.

In the embodiment illustrated in the figures, the transfer carriage 31 comprises two opposite flanks 32, provided with idle wheels 33 which run along rails 35, which define two opposite horizontal running lines, in a perpendicular direction to the vertical plane passing through the axis AC of the loading station. A cross-piece 34 solidly joins the two flanks 32.

A crank system 36 (of which only the con rod is illustrated in the figures) activated by a motor, cyclically displaces the transfer carriage 31 between the distal and proximal positions.

The transfer carriage 31 bears a shaft 45 ends of which are fixed to the two flanks 32, the axis of which is parallel to the axis AC of the loading station, and defines the first rotation axis A1.

The distal ends of the first arms 41 (i.e. the ends located on the right side of figure 1) are inserted on the shaft 45, rotatably about the shaft 45. The ends are solidly connected to one another two by two, by means of bushes 47 inserted about the shaft 45 and idle with respect thereto, the ends of which are solidly fixed to the distal ends of the first arms 41.

The distal ends of the arms 41 possess respective prolongations in a lever shape.

The first arms 41 all move solidly with one another with rotation about the shaft 45 (axis A1); for this purpose, linear actuators 51 are provided (for example two in number) the action of which produces the rotation of the first arms 41 by an angle of about 90 degrees.

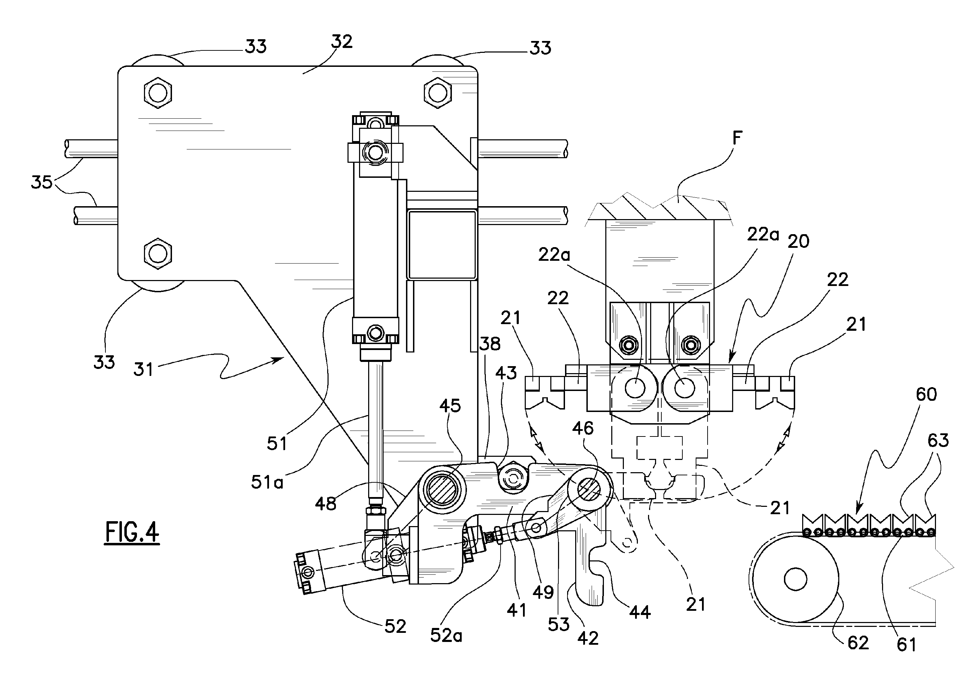

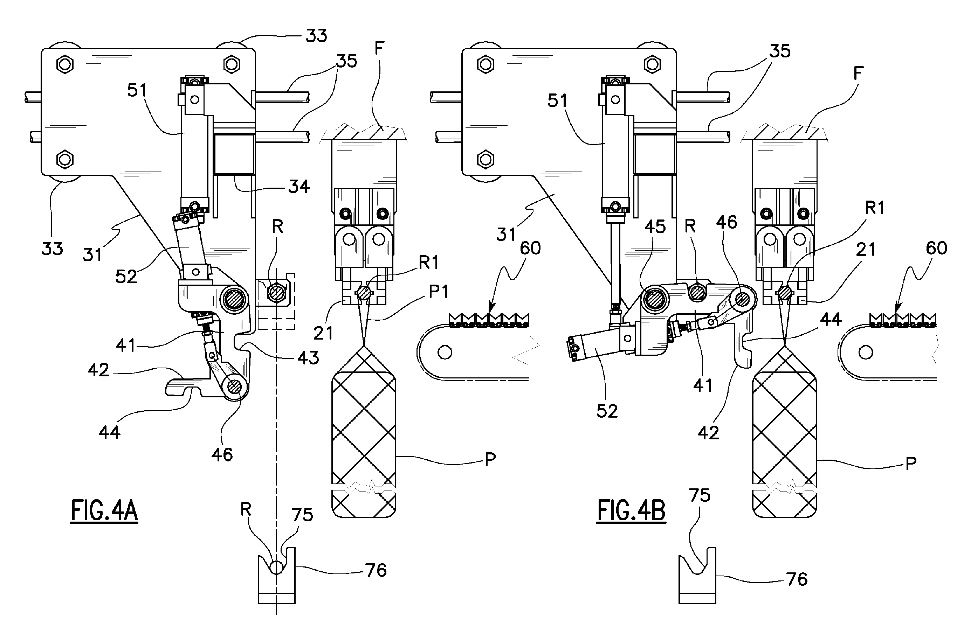

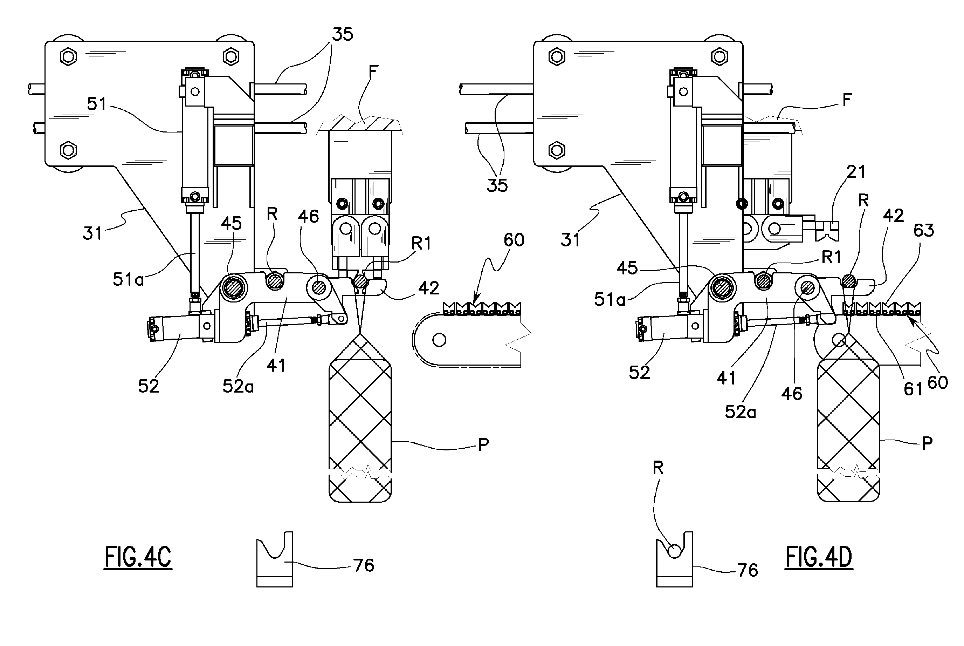

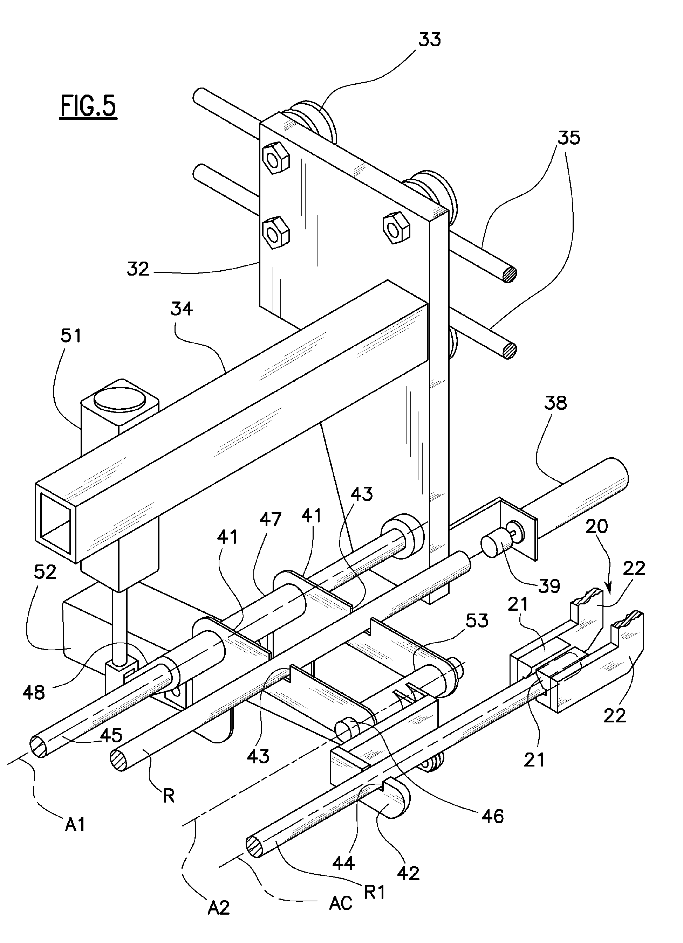

In particular, each linear actuator 51 is supported by the crosspiece 34 and the end of the stem acts on a lever 48 solidly fixed to a respective bush 47 (see figures 4 and 5).

In the illustrated embodiment in the figures, the proximal ends of the first arms 41 (i.e. the ends located on the left side of figure 1) are crossed two by two by a pin 46, parallel to the shaft 45, not constrained to the two flanks 32, the axis whereof is parallel to the axis AC, and defines the second rotation axis A2. In particular, the pin 46 is fixed solidly to the first arms 41.

A second bush 53 is inserted about the pin 46 of each pair of arms 41; the bush 53 is free to rotate with respect to the pair of arms 41.

The pins 46 and the relative bushes 53 are at least two in number, closed between a same number of pairs of first arms 41; in the illustrated example in the figures they are three in number.

A second arm 42 is fixed to each second bush 53, which second arm 42 can rotate about the axis A2 of the second shaft 46, together with the respective bush. The rotation of the second arms 42 is produced by respective second linear actuators 52 (three in number in the example illustrated in the figures), the action of which produces the rotation of the second arms 42 by an angle of about 90 degrees.

In particular, the linear actuators 52 are each supported by an element constrained to the leer 49 of a respective first arm 41, and the end of the stem thereof acts on a lever 49 fixed solidly to a respective bush 53. The activation of the first actuators 51 occurs simultaneously and produces the rotation by 90 degrees, in a direction and in the opposite direction, of the whole group of arms 41 and 42 about the first rotation axis A1 (see in particular the comparison between figures 4A and 4B); in particular note that the rotation of the first arms 41 also produces an equal rotation of the second arms 42, as they are supported by the first arms 41.

The activation of the second actuators 52 produces a rotation by 90 degrees in a direction and in the opposite direction, of the arms 42 about the second rotation axis A2 (see in particular the comparison between figures 4B and 4C). Further, the second arms 42 are able to rotate about the second rotation axis A2 while the first arms 41 stay still.

The profiled seatings 43 and 44 are recess-shaped with a concavity facing upwards; the first arms 41 and the second arms 42 are rotated between a vertical-lie position in which the support rods project by force of gravity from the respective seating and a horizontal-lie position in which the respective seating is facing upwards and is able to retain a support rod R.

The number of first arms 41 and the support seatings 43 is at least two, which is sufficient to determine a stable and precise rest position for a rod R; however, there can also be more than two of them, and in this case the support seatings are aligned to one another along a straight line. In fact, in the illustrated embodiment of the figures, for structural reasons the number of arms 41 is twice the number of arms 42 and is greater than two; in this case the seatings 43 are in any case aligned to one another (as illustrated in the figures), or there can be a seating 43 only in one of the two arms 41 of each pair, while the other arm will exhibit an increased passage opening.

The number of second arms 42 and support seatings 44 is also at least two, being sufficient to determine a stable and precise support position; however, they can also be more than two, and in this case the seatings are aligned with one another along a straight line (as occurs in the embodiment illustrated by way of example in the figures).

The axes of the support seatings 43 and 44 are advantageously at a distance from one another such that when the transfer carriage 31 is brought into the proximal position, the support rod R positioned in the first seatings 43 is in the coaxial position with the loading axis AC, and at the same time the rod R positioned in the second seatings 44 is in the release position of the rod R to the distancing means 60.

At least two second arms 42 are included (in the embodiment illustrated in the figures, three second arms 42 are comprised) which are independent of one another and are activated at different times to one another, as will be explained in greater detail in the following. The second arms 42 therefore can move independently of one another and the respective second activating means (actuators 52) are able to rotate the second arms 42 from the vertical position to the horizontal position and vice versa independently between an arm 42 and the other. As the second handling arms 42 are brought to support the support rod R1 arranged in the loading station SC (as will be explained in greater detail in the following), the axial arrangement thereof (along the axis AC) is stabilized in such a way as not to interfere with the position of the hooking loops P1 and possibly with the products P located on the rod R1. Further, as the dimensions of the hung products can change, means/specifications can be included that vary the axial position of the second arms 42; for example the axial position can be mechanically displaced, along the crosspiece 34, of one (or more) groups formed by a pair of arms 41 and by an arm 42 with respective jacks 51 and 52; a respective secondary arm 42 can be included by the side of each of one or more secondary arms 42, having a different axial position with respect to the primary arm 42, which is activated alternatively thereto.

The apparatus 30 of the invention further comprises a collecting device 70 able to remove a support rod at a time from a tank 71 of rods, by means of a pair of support elements. The device 70 is placed at the distal position of the transfer carriage 31, below it.

In the embodiment illustrated in the figures, the tank 71 of rods is a recipient which contains numerous empty rods R, and has a lower support base 72 that is inclined and an outlet channel 73 that is inclined through which the rods descend one at a time, by gravity and rolling. A mechanism 74 is located at the outlet mouth of the channel 73, which mechanism 74 is activated by a jack 74a which produces, on command, exit of one rod R at a time.

The rod which exits from the channel 73 is rolled into a support seating 75, with a concavity facing upwards, defined by two aligned brackets 76 such that the axis of the seating 75 is horizontal and parallel to the axis AC. The two brackets 76 are part of a rigid frame 77, vertically mobile, activating in vertical translation by a vertical jack 78.

The rest seating 75 translates by moving along a vertical path between the distal position of the transfer carriage 31 and the loading axis AC in the loading station.

The support seating 75 translates between a lower position in which it receives a rod R which exits from the outlet channel 73 and an upper position in which the rod R is in a position such as to be supportingly gripped by the first seatings 43 of the first arms 41, the transfer carriage 31 being in a distal position.

The apparatus 30 of the invention is further provided with a command system which:
moves the collecting device 70 in combination with the movement of the handling arms 41, 42 such that a support rod, collected from the tank 71, is transferred into the first support seatings 43 of the first arms 41;
rotates the handling arms 41, 42 such that a support rod R1 constrained in the loading station SC is arranged in the second seatings 44 for supporting the arms,
displaces the transfer carriage 31 from the distal operating position to the proximal position, after this displacement transferring a support rod R located in the second support seatings on the distancing means 60;
displaces the transfer carriage 31 such as to transfer a support rod R located in the first support seatings 43 into the loading position of the loading station. The command system is not described herein as it is normal for the expert in the sector, determined fundamentally by the functioning of the apparatus, which is here described, for which it is proposed.

During functioning, the products P are hung to the first hooking organs 11 while they are in a zone of the line 10 located upstream of the loading station SC. For example an initial conveyor belt T is provided, which advances loose products P having a horizontal lie, which are hung (for example manually) on the supply lie 10 with the loops P1 hung on the first hooking organs 11.

As the line 10 advances with a continuous motion, or in step-motion, it bears the products P one at a time in succession into the loading station SC. Normally the advancement velocity is 4-10 products P per minute.

From here, by means of the loading device 25, a transfer cycle of a single product P is performed at a time from the supply line 10 to the stationary rod R1 and blocked in the loading position by the constraining means 20.

In this cycle, first transfer of the hooking loops P1 from the first hooking organ 11 to the second hooking organ 27 is carried out; then the mobile apparatus 26 runs along the track 28 thereof, towards the further end Rb (the end locked between the jaws 21 of the constraining means 20) and carried with it a product P hung on the organ 27; this is positioned at a short distance above the rod R1 and the loop P1 is kept open by the organ 27 (which has the shape of an arched sheet), such as to slide about the rod R1. Once the mobile apparatus 26 has reached the programmed axial position, it unloads the loop P1 from the organ 27 and releases it hung to the rod R1.

At each transfer cycle, each product P which, hung to the chain 12, reaches the loading station SC, is transferred and hung to the rod R1; obviously at each transfer cycle the position in which the product P is released on the rod R varies along the length of the rod; the first product P is arranged relatively close to the distal end Rb of R1 and the following products P are arranged, gradually, closer to the proximal end Ra, such as to have the products P hung and distributed homogeneously along the whole rod R1.

Greater details can be found in the Italian patent application no. RE2012A000052, in the name of the present applicant, in which a description is made of an example of a supply line and a loading station of the above-illustrated type.

In relation to the functioning of the apparatus 30 of the invention, in a first step the collecting device 70 is activated in combination with the movement of the handling arms 41, 42, such that a support rod R, collected from the tank 71, is deposited by the device 70 in the first rest seatings 43, while the transfer carriage 31 is in a distal position with respect to the distancing means 60 (see figures 4A and 4B).

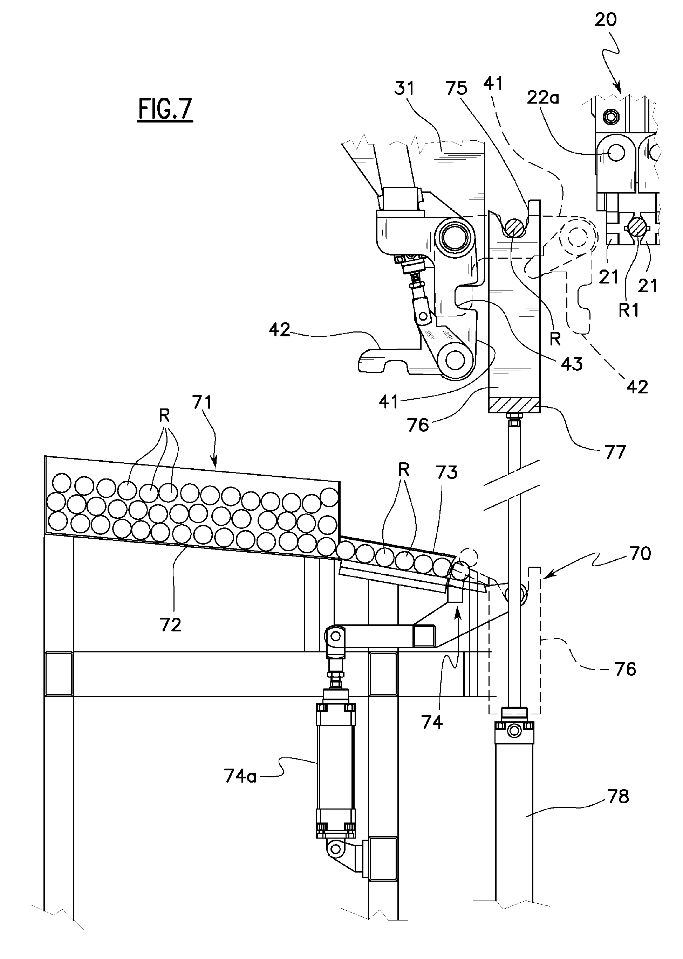

In greater detail, a rod R at a time is extracted from the tank 71 using the mechanism 74, which is deposited in the support seatings 75 of the brackets 76, which are initially in a lowered position (as illustrated by a broken line in figure 7). Thereafter the frame 77 is raised into an upper position (as illustrated by an unbroken line in figure 7), and the rod R is brought close to the group of handling arms 41, 42, the transfer carriage 31 being a distal position, which arms are positioned, in a first configuration (also illustrated in figure 4A) in which the first arms 41 are in a vertical position, and the second arms 42 are in a horizontal position, turned backwards, with the respective seating 44 facing downwards.

The actuators 51 are therefore actuated and rotate the first arms 41 by about 90 degrees (and with them the second arms 42), arranging them in a second configuration (illustrated in figure 4B and with broken lines in figure 7), in which the first arms 41 have a horizontal lie with the seatings 43 facing upwards, while the second arms 42 are in a vertical position facing downwards; in the second configuration, the seatings 43 of the first arms 41 are arranged at the rod R located on the frame 77. Thereafter the frame 77 is brought into the lower position, and leaves the rod R supported in the seatings 43 (as illustrated in figure 4B).

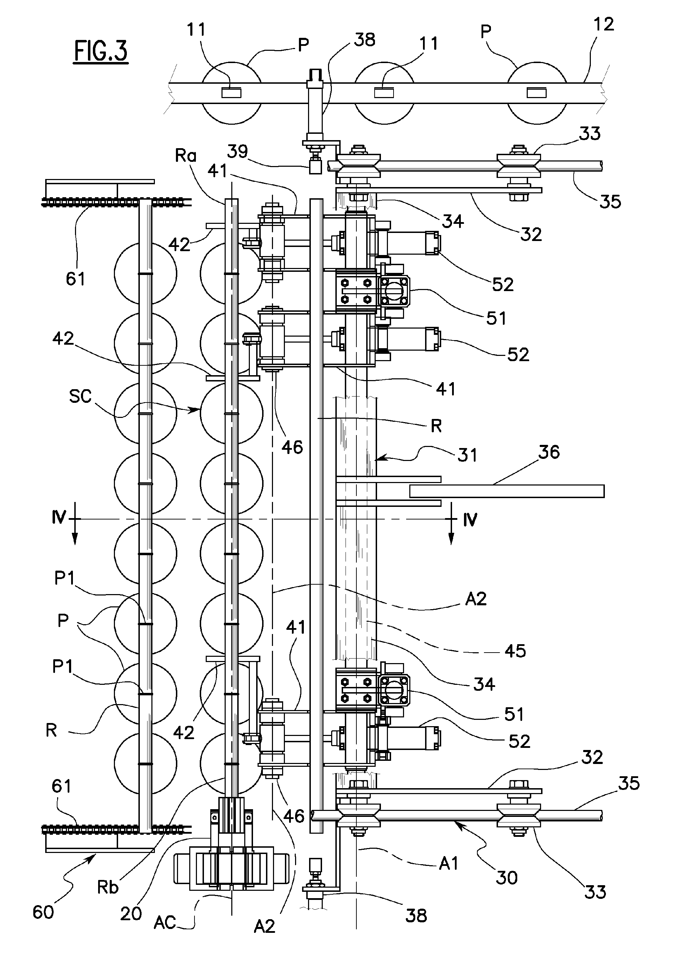

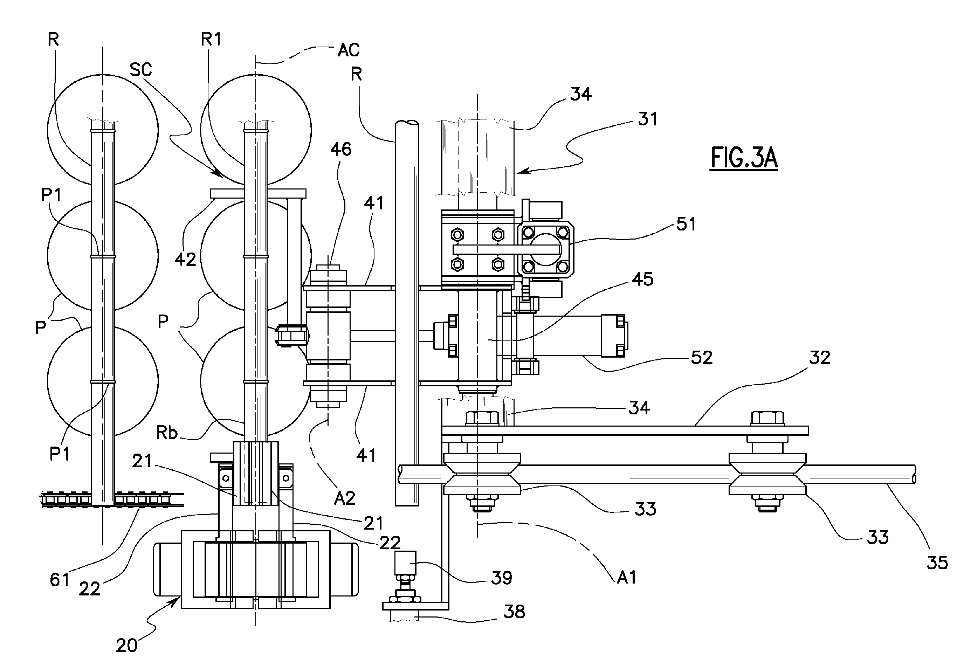

To facilitate the correct axial position of the rod R supported in the first seatings 43, the carriage 31 bears two jacks 38 having coaxial and opposite stems 39 (see figure 3 and figure 5), arranged at the first seatings 43, which, by acting contemporaneously on the ends of the rod R positioned in the seating 44, determine the correct axial positioning thereof.

In the following second functioning step, the second handling arms 42 are rotated such that the second support seatings 44 of the arms are arranged about the support rod R1 arranged in the loading station SC in the loading position (see figure 4C). In greater detail, the second actuators 52 are actuated, which bring the handling arms into a third configuration in which, while the first arms 41 remain horizontal, the second arms 42 are also brought into the horizontal position. In this configuration, the second arms 42 bring the seatings to contain the rod R1 placed in the loading position. During this step, the second arms 42 have the function of supporting, at least in part, the weight of the products which are hung in succession on the loading rod R1. For this purpose, the second arms 42 are brought into the horizontal position in which they active support the rod R1 (third configuration) in a sequential way and coordinated with the loading of products on the rod R1, so as not to obstruct the passage of the products which run along the rod R1. This is to say that at first after the rod R1 has been gripped by the jaws 21 and before the loading thereon of the products P has begun, all the arms 42 are in a vertical configuration, inactive, so as not to obstruct the passage of the products; then, as the products P gradually loaded onto the rod R1, the arms 42 are raised to support the rod R1 in the position immediately upstream (higher than in figure 1) of the position where the products have been hung. In the example of figure 3, the first arm 42 is raised after loading of two products, the second arm 42 is raised after the loading of a further four products and the third arm 42 is raised after the last product P has been loaded on the rod R1.

In the following third functioning step, the transfer carriage 31 is displaced from the distal position to the proximal position, after this displacement transferring the support rod R1, loaded with products P, positioned in the second rest seatings 44, onto the distancing means 60.

In greater detail, first the jaws 21 are distanced from one another and the rod R1 is left free and supported on the seatings 44 of the second arms 42; the transfer carriage 31 is then displaced closed to the distancing means 60 (proximal position) where the second seatings 44 are positioned above the initial end of the means 60 (see figure 4D); then the second arms 42 are lowered into the vertical position, such as to release the rod R1 on the means 60, wherein the rod R loaded with products is taken supportingly by one of the support seatings 63 of the chain conveyors 61. The chains 61 are advanced by a step, so that they can receive the following rod loaded with products, and realize an order of loaded rods (made up of one or a predetermined and variable number of loaded rods) which are transferred, together, onto the frames or scales which will then be transferred in turn to other rooms to be subjected to the treatments of drying, seasoning, smoking or another treatment.

At the same time as the third step described above, the fourth functioning step is carried out, in which the transfer carriage 31, displaced into a proximal position, brings the support rod R, located in the first support seatings 43, into the loading position of the loading station SC. In greater detail, when the carriage 31 arrives in the proximal position, the rod R borne by the first arms 41 is in a coaxial position with the axis AC of the loading position; here the rod R is gripped and constrained by the jaws 21 and readied to be loaded with products P.

In the following fifth step (and the final step of the cycle) of the functioning, the arms 41 and 42 are brought into the first configuration, and the transfer carriage 31 is returned into the (initial) distal position, and thus free up the rod loaded with products, leaving it on the distancing means 60, and also free up the rod positioned in the first seatings 43, leaving it gripped by the constraining means 20.

Obviously numerous modifications of a practical-applicational nature can be made to the invention, without its forsaking the scope of the inventive idea as claimed in the following.

## Claims

1. An apparatus for loading and distancing support rods for products which are hung, in a loading station of the products on the rod,
the loading station comprising:
loading means (25) for transferring, in succession, the products from a supply line (10) located upstream and inserting them in a hung condition to a support rod (R1) supported in the loading station,
distancing means (60) of the rods loaded with hung products,
wherein the apparatus comprises:
constraining means (20) for constraining a support rod at a time in a fixed position, with a horizontal axis (AC) of loading the products on the rod, in the loading station,
a transfer carriage (31) mobile between a first and a second operating position, respectively distal and proximal with respect to the distancing means, which bears:
first handling arms (41), parallel to one another, which exhibit first profiled seatings (43) aligned to one another defining a first support position for a support rod, having an axis parallel to the loading axis (AC);
second handling arms (42) parallel to one another, which exhibit second profiled seatings (44) aligned to one another, which define a second support position for a support rod, having a parallel axis to the loading axis (AC),
the first and second support seatings being in a distal position and respectively in a proximal position with respect to the distancing means (60), the handling arms (41, 42) being constrained to the transfer carriage (31) with rotatability about at least a first axis (A1), parallel to the loading axis (AC);
means (51, 52) for rotating the handling arms (41, 42),
a collecting device (70), able to collect a support rod at a time from a rod tank (71), by means of a pair of support elements (76),
a command system which:
moves the collecting device (70) in combination with the movement of the handling arms (41, 42) such that a support rod, collected from the tank (71), is transferred into the first support seatings (43) of the first arms (41);
rotates the handling arms (41, 42) such that a support rod (R1) constrained in the loading station (SC) is arranged in the second seatings (44) for supporting the arms,
displaces the transfer carriage (31) from the distal operating position to the proximal position, after this displacement transferring a support rod located in the second support seatings on the distancing means (60);
displaces the transfer carriage (31) such as to transfer a support rod located in the first support seatings (43) into the loading position of the loading station.

2. The apparatus of claim 1, wherein
the first handling arms (41) are hinged to the transfer carriage (31) rotatably about the first rotation axis (A1);
the second handling arms (42) are hinged to the first handling arms (41) rotatably with respect thereto about a second rotation axis (A2) parallel to the first axis (A1) and at a distance therefrom.

3. The apparatus of claim 1, **characterised in that** the axes of the support seatings 43, and 44 are at a reciprocal distance such that when the transfer carriage (31) is brought into the proximal position the support rod located in the first support seatings is in a coaxial position with the loading axis (AC) and contemporaneously the support rod located in the second seating is in a transfer position of the rod to the distancing means (60).

4. The apparatus of claim 3, wherein the profiled seatings 43, 44 are recess-shaped with a concavity facing upwards and the handling arms (41, 42) are rotated between a vertical lie position in which the support rods exit by force of gravity from the respective support seating and a horizontal lie position in which the respective support seating is facing upwards and is able to retain a support rod.

5. A method for loading and distancing support rods of products which are hung, in a loading station of the products on the rod,
the loading station comprising:
loading means (25) able to transfer, in succession, the products from a supply line (10) located upstream and to insert them in a hung condition on a support rod (R1) supported in the loading station,
distancing means (60) of the rods loaded with hung products,
comprising:
a) providing a transfer apparatus comprising:
- constraining means (20) able to constrain a support rod at a time in a fixed position, with a horizontal axis (AC), for loading the products onto the rod in the loading station
- a transfer carriage (31) mobile between a first and a second operating position in a distanced position and respectively in a neared position with respect to the distancing means, which bears:
- first handling arms (41), parallel to one another, which possess first profiled seatings (43) aligned to one another, which define a first support position for a support rod, having an axis parallel to the loading axis (AC);
- second handling arms (42), parallel to one another, which possess second profiled seatings (44), aligned to one another, which define a second support position for a support rod, having an axis that is parallel to the loading axis (AC),
- first and second support seatings being in a distal position and respectively in a proximal position with respect to the distancing means (60),
- the handling arms (41, 42) being constrained to the transfer carriage (31) rotatably about at least a first axis (A1), parallel to the loading axis (AC);
- means (51, 52) for rotating the handling arms (41, 42),
- a collecting device (70) able to collect a support rod at a time from a rod tank (71) by means of a pair of support elements (76),
b) moving the collecting device (70) in combination with the movement of the handling arms (41, 42) such that a support rod, collected from the tank (71), is deposited in the first support seatings of the handling arms, the transfer arm being in a distal position;
c) rotating the handling arms (41, 42) such that a support rod constrained in the loading station is arranged in the second support seatings (44) of the arms,
d) displacing the transfer carriage (31) from the distal position to the proximal position, following the displacement transferring a support rod located in the second support seatings (44) onto the distancing means (60),
e) displacing the transfer carriage (31) in such a way as to transfer a support rod located in the first support seatings (43) into the loading position of the loading station.

6. The method of claim 5, wherein, when the transfer carriage (31) reaches the proximal position, the support rod located in the first support seatings (43) is coaxial with the loading axis (AC) of the loading station.

## Patentansprüche

1. Vorrichtung zum Aufladen und Beabstanden von Tragestangen für hängende Produkte in einer Station zum Aufladen der Produkte auf die Stangen, wobei die Ladestation Folgendes umfasst:
Lademittel (25), um die Produkte in Folge von einer prozessaufwärts angeordneten Zufuhrstrecke (10) zu überführen und sie in einem hängenden Zustand auf eine Tragestange (R1) zu setzen, die in der Ladestation getragen wird,
Beabstandungsmittel (60) für die Stangen, die mit hängenden Produkten beladen sind,
wobei die Vorrichtung Folgendes umfasst:
Haltemittel (20), um jeweils eine Tragestange mit einer horizontalen Achse (AC) zum Laden der Produkte auf die Stange in einer festen Position in der Ladestation zu halten,
einen Überführungsschlitten (31), der zwischen einer ersten und einer zweiten Betriebsposition beweglich ist, die sich im Verhältnis zu den Beabstandungsmitteln entfernt beziehungsweise nahe befinden, wobei der Schlitten folgendes trägt:
erste, parallel zueinander liegende Handhabungsarme (41), die erste profilierte Sitze (43) aufweisen, die aneinander ausgerichtet sind und eine erste Trageposition für eine Tragestange definieren, die eine parallel zur Ladeachse (AC) liegende Achse aufweist,
zweite, parallel zueinander liegende Handhabungsarme (41), die zweite profilierte Sitze (43) aufweisen, die aneinander ausgerichtet sind und eine zweite Trageposition für eine Tragestange definieren, die eine parallel zur Ladeachse (AC) liegende Achse aufweist,
wobei sich die ersten und die zweiten Tragesitze im Verhältnis zu den Beabstandungsmitteln (60) an einer entfernten beziehungsweise einer nahen Position befinden,
wobei die Handhabungsarme (41, 42) drehbar um mindestens eine erste Achse (A1), die parallel zur Ladeachse (AC) liegt, am Überführungsschlitten (31) gehalten werden,
Mittel (51, 52) zum Drehen der Handhabungsarme (41, 42),
eine Aufnahmeeinrichtung (70), die in der Lage ist, mittels eines Paares aus Trageelementen (76) jeweils eine Tragestange aus einem Stangenbehälter (71) aufzunehmen,
ein Befehlssystem, welches:
die Aufnahmeeinrichtung (70) zusammen mit der Bewegung der Handhabungsarme (41, 42) derart bewegt, dass eine Tragestange, die aus dem Behälter (71) aufgenommen wurde, in die ersten Tragesitze (43) der ersten Arme (41) überführt wird,
die Handhabungsarme (41, 42) derart dreht, dass eine in der Ladestation (SC) gehaltene Tragestange (R1) in den zweiten Sitzen (44) zum Tragen der Arme angeordnet ist,
den Überführungsschlitten (31) von der entfernten Betriebsposition zur nahen Position verlagert und nach dieser Verlagerung eine Tragestange, die in den zweiten Tragesitzen angeordnet ist, auf die Beabstandungsmittel (60) überführt,
den Überführungsschlitten (31) derart verlagert, dass eine Tragestange, die sich in den ersten Tragesitzen (43) befindet, in die Ladeposition der Ladestation überführt wird.

2. Vorrichtung nach Anspruch 1, wobei:
die ersten Handhabungsarme (41) drehbar um die erste Rotationsachse (A1) an den Überführungsschlitten (31) angelenkt sind und
die zweiten Handhabungsarme (42) in einem Abstand zu den ersten Handhabungsarmen (41) an diese angelenkt und im Verhältnis zu diesen um eine zweite Rotationsachse (A2) drehbar sind, die parallel zur ersten Achse (A1) und in einem Abstand von dieser liegt.

3. Vorrichtung nach Anspruch 1, **dadurch gekennzeichnet, dass** die Achsen der Tragesitze (43, 44) derart voneinander entfernt liegen, dass sich, wenn der Überführungsschlitten (31) in die nahe Position gebracht wird, die in den ersten Tragesitzen angeordnet Tragestange in einer koaxialen Position mit der Ladeachse (AC) befindet und sich die in den zweiten Sitzen angeordnete Tragestange gleichzeitig in einer Überführungsposition der Stange in die Beabstandungsmittel (60) befindet.

4. Vorrichtung nach Anspruch 3, wobei die profilierten Sitze (43, 44) als Vertiefung mit einer Höhlung gebildet sind, die nach oben weist, und die Handhabungsarme (41, 42) zwischen einer vertikal liegenden Position, in der die Tragestangen durch Schwerkraft den entsprechenden Tragesitz verlassen, und einer horizontal liegenden Position, in welcher der entsprechende Tragesitz nach oben weist und in der Lage ist, eine Tragestange zu halten, gedreht werden.

5. Verfahren zum Aufladen und Beabstanden von Tragestangen für hängende Produkte in einer Station zum Aufladen der Produkte auf die Stangen, wobei die Ladestation Folgendes umfasst:
Lademittel (25), um die Produkte in Folge von einer prozessaufwärts angeordneten Zufuhrstrecke (10) zu überführen und sie in einem hängenden Zustand auf eine Tragestange (R1) zu setzen, die in der Ladestation getragen wird,
Beabstandungsmittel (60) für Stangen, die mit hängenden Produkten beladen werden,
Folgendes umfassend:
a) Bereitstellen einer Überführungsvorrichtung, die Folgendes umfasst:
Haltemittel (20), die in der Lage sind, jeweils eine Tragestange mit einer horizontalen Achse (AC) zum Laden der Produkte auf die Stange in einer festen Position in der Ladestation zu halten,
einen Überführungsschlitten (31), der zwischen einer ersten und einer zweiten Betriebsposition beweglich ist, die sich im Verhältnis zu den Beabstandungsmitteln in einer entfernten Position beziehungsweise einer nahen Position befinden, wobei der Schlitten folgendes trägt:
erste, parallel zueinander liegende Handhabungsarme (41), die erste profilierte Sitze (43) aufweisen, die aneinander ausgerichtet sind und eine erste Trageposition für eine Tragestange definieren, die eine parallel zur Ladeachse (AC) liegende Achse aufweist,
zweite, parallel zueinander liegende Handhabungsarme (41), die zweite profilierte Sitze (43) aufweisen, die aneinander ausgerichtet sind und eine zweite Trageposition für eine Tragestange, definieren, die eine parallel zur Ladeachse (AC) liegende Achse aufweist,
erste und zweite Tragesitze, die sich im Verhältnis zu den Beabstandungsmitteln (60) an einer entfernten Position beziehungsweise einer nahen Position befinden
wobei die Handhabungsarme (41, 42) drehbar um mindestens eine erste Achse (A1), die parallel zur Ladeachse (AC) liegt, am Überführungsschlitten (31) gehalten werden,
Mittel (51, 52) zum Drehen der Handhabungsarme (41, 42),
eine Aufnahmeeinrichtung (70), die in der Lage ist, mittels eines Paares aus Trageelementen (76) zu einem Zeitpunkt eine Tragestange aus einem Stangenbehälter (71) aufzunehmen,
b) Bewegen der Aufnahmeeinrichtung (70) zusammen mit der Bewegung der Handhabungsarme (41, 42) derart, dass eine Tragestange, die aus dem Behälter (71) aufgenommen wurde, in die ersten Tragesitze der ersten Arme überführt wird, wobei sich der Überführungsarm in einer entfernten Position befindet,
c) Drehen der Handhabungsarme (41, 42) derart, dass eine in der Ladestation gehaltene Tragestange in den zweiten Tragesitzen (44) der Arme angeordnet wird,
d) Verlagern des Überführungsschlittens (31) von der entfernten Position zur nahen Position und nach dieser Verlagerung Überführen einer Tragestange, die in den zweiten Tragesitzen angeordnet ist, auf die Beabstandungsmittel (60),
e) Verlagern des Überführungsschlittens (31) derart, dass eine Tragestange, die sich in den ersten Tragesitzen (43) befindet, in die Ladeposition der Ladestation überführt wird.

6. Verfahren nach Anspruch 5, wobei, wenn der Überführungsschlitten (31) die nahe Position erreicht, die in den ersten Tragesitzen (43) angeordnete Tragestange koaxial mit der Ladeachse (AC) der Ladestation liegt.

## Revendications

1. Appareil pour charger et espacer des barres de support pour des produits qui sont suspendus, dans une station de chargement des produits sur la barre, la station de chargement comprenant :
un moyen de chargement (25) pour transférer successivement les produits provenant d'une ligne d'alimentation (10) située en amont et les insérer dans une condition suspendue à une barre de support (R1) supportée dans la station de chargement,
un moyen d'espacement (60) des barres chargées de produits suspendus,
dans lequel l'appareil comprend :
un moyen de contrainte (20) pour contraindre une barre de support à la fois dans une position fixe, avec un axe horizontal (AC) de chargement des produits sur la barre, dans la station de chargement,
un chariot de transfert (31) mobile entre une première position de fonctionnement et une deuxième position de fonctionnement, respectivement distale et proximale par rapport au moyen d'espacement, portant :
des premiers bras de manutention (41), parallèles entre eux, qui présentent des premiers sièges profilés (43) alignés entre eux et définissant une première position de support pour une barre de support, comportant un axe parallèle à l'axe de chargement (AC) ;
des deuxièmes bras de manutention (42), parallèles entre eux, qui présentent des deuxièmes sièges profilés (44) alignés entre eux et définissant une deuxième position de support pour une barre de support, comportant un axe parallèle à l'axe de chargement (AC),
les premier et deuxième sièges de support se trouvant respectivement en position distale et en position proximale par rapport au moyen d'espacement (60),
les bras de manutention (41, 42) étant contraints sur le chariot de transfert (31) en pouvant tourner autour d'au moins un premier axe (A1), parallèle à l'axe de chargement (AC) ;
un moyen (51, 52) pour faire tourner les bras de manutention (41, 42),
un dispositif de collecte (70) capable de collecter une barre de support à la fois d'un réservoir de barres (71), à l'aide d'une paire d'éléments de support (76),
un système de commande qui :
déplace le dispositif de collecte (70) en combinaison avec le mouvement des bras de manutention (41, 42) de telle sorte qu'une barre de support, collectée du réservoir (71), est transférée dans les premiers sièges de support (43) des premiers bras (41) ;
tourne les bras de manutention (41, 42) de telle sorte qu'une barre de support (R1) contrainte dans la station de chargement (SC) est agencée dans les deuxièmes sièges (44) pour supporter les bras,
déplace le chariot de transfert (31) depuis la position de fonctionnement distale jusqu'à la position proximale, après que ce déplacement a transféré une barre de support située dans les deuxièmes sièges de support sur le moyen d'espacement (60) ;
déplace le chariot de transfert (31) de manière à transférer une barre de support située dans les premiers sièges de support (43) en position de chargement de la station de chargement.

2. Appareil selon la revendication 1, dans lequel
les premiers bras de manutention (41) sont articulés au chariot de transfert (31) en rotation autour du premier axe de rotation (A1) ;
les deuxièmes bras de manutention (42) sont articulés aux premiers bras de manutention (41) en rotation par rapport à ceux-ci autour d'un deuxième axe de rotation (A2) parallèle au premier axe (A1) et à une certaine distance de celui-ci.

3. Appareil selon la revendication 1, **caractérisé en ce que** les axes des sièges de support 43 et 44 se trouvent à une distance réciproque telle que quand le chariot de transfert (31) est amené en position proximale, la barre de support située dans les premiers sièges de support se trouve dans une position coaxiale avec l'axe de chargement (AC) et simultanément la barre de support située dans le deuxième siège se trouve dans une position de transfert de la barre au moyen d'espacement (60).

4. Appareil selon la revendication 3, dans lequel les sièges profilés 43, 44 ont une forme renfoncée avec une concavité tournée vers le haut et les bras de manutention (41, 42) sont mis en rotation entre une position couchée verticale dans laquelle les barres de support sortent par force de gravité du siège de support respectif et une position couchée horizontale dans laquelle le siège de support respectif est tourné vers le haut et est capable de retenir une barre de support.

5. Procédé pour charger et espacer des barres de support de produits qui sont suspendus, dans une station de chargement des produits sur la barre,
la station de chargement comprenant :
un moyen de chargement (25) capable de transférer successivement les produits provenant d'une ligne d'alimentation (10) située en amont et de les insérer dans une condition suspendue à une barre de support (R1) supportée dans la station de chargement,
un moyen d'espacement (60) des barres chargées de produits suspendus,
comprenant :
a) la fourniture d'un appareil de transfert comportant :
- un moyen de contrainte (20) capable de contraindre une barre de support à la fois dans une position fixe, avec un axe horizontal (AC) pour charger les produits sur la barre dans la station de chargement ;
- un chariot de transfert (31) mobile entre une première position de fonctionnement et une deuxième position de fonctionnement, respectivement dans une position distale et une position proximale par rapport au moyen d'espacement, qui porte :
- des premiers bras de manutention (41), parallèles entre eux, qui possèdent des premiers sièges profilés (43) alignés entre eux, qui définissent une première position de support pour une barre de support, comportant un axe parallèle à l'axe de chargement (AC) ;
- des deuxièmes bras de manutention (42), parallèles entre eux, qui possèdent des deuxièmes sièges profilés (44), alignés entre eux, qui définissent une deuxième position de support pour une barre de support, comportant un axe parallèle à l'axe de chargement (AC),
- des premier et deuxième sièges de support se trouvant respectivement en position distale et en position proximale par rapport au moyen d'espacement (60),
- les bras de manutention (41, 42) étant contraints sur le chariot de transfert (31) en pouvant tourner autour d'au moins un premier axe (A1), parallèle à l'axe de chargement (AC) ;
- un moyen (51, 52) pour faire tourner les bras de manutention (41, 42),
- un dispositif de collecte (70) capable de collecter une barre de support à la fois depuis un réservoir de barres (71), à l'aide d'une paire d'éléments de support (76),
b) le déplacement du dispositif de collecte (70) en combinaison avec le mouvement des bras de manutention (41, 42) de telle sorte qu'une barre de support, collectée du réservoir (71), est déposée dans les premiers sièges de support des bras de manutention, le bras de transfert étant en position distale,
c) la rotation des bras de manutention (41, 42) de telle sorte qu'une barre de support contrainte dans la station de chargement est agencée dans les deuxièmes sièges de support (44) des bras,
d) le déplacement du chariot de transfert (31) depuis la position distale jusqu'à la position proximale, après que ce déplacement a transféré une barre de support située dans les deuxièmes sièges de support (44) sur le moyen d'espacement (60),
e) le déplacement du chariot de transfert (31) de manière à transférer une barre de support située dans les premiers sièges de support (43) en position de chargement de la station de chargement.

6. Procédé selon la revendication 5 dans lequel, quand le chariot de transfert (31) atteint la position proximale, la barre de support située dans les premiers sièges de support (43) est coaxiale avec l'axe de chargement (AC) de la station de chargement.
